(19) Europäisches Patentamt
European Patent Office
Office européen des brevets

(11) **EP 4 744 838 A1**

(12) **EUROPÄISCHE PATENTANMELDUNG**

(43) Veröffentlichungstag:
**20.05.2026  Patentblatt 2026/21**

(21) Anmeldenummer: **25215528.8**

(22) Anmeldetag: **13.11.2025**

(51) Internationale Patentklassifikation (IPC):
**B25F 5/00** (2006.01)       **B27B 17/08** (2006.01)
**F16H 7/00** (2006.01)       **G01M 13/023** (2019.01)

(52) Gemeinsame Patentklassifikation (CPC):
**B27B 17/08; B25F 5/00; G01M 13/023**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **15.11.2024  DE 102024133510**

(71) Anmelder: **Andreas Stihl AG & Co. KG
71336 Waiblingen (DE)**

(72) Erfinder:
• **Naegele, Claus
70563 Stuttgart (DE)**
• **Harjung, Philipp
73614 Schorndorf (DE)**

(74) Vertreter: **Karzel, Philipp et al
Patentanwälte
Dipl.-Ing. W. Jackisch & Partner mbB
Menzelstraße 40
70192 Stuttgart (DE)**

(54) **HANDGEFÜHRTES ARBEITSGERÄT UND VERFAHREN ZUM BETRIEB EINES HANDGEFÜHRTEN ARBEITSGERÄTS**

(57)    Die Erfindung betrifft ein handgeführtes Arbeitsgerät umfassend ein Werkzeug (2), einen Motor (3) zum drehenden Antrieb des Werkzeugs (2) und ein Kraftübertragungsmittel (4) zur Kraftübertragung von dem Motor (3) auf das Werkzeug (2) mittels Reibkontakt. Bei Kontakt des drehenden Werkzeugs (2) mit einem externen Gegenstand (30) kann es zu einer Reaktion des Werkzeugs (2) kommen. Das Arbeitsgerät (1) ist so ausgelegt, dass es einen Schlupf des Kraftübertragungsmittels (4) zwischen dem Motor (3) und dem Werkzeug (2) ermittelt. Das Arbeitsgerät (1) überwacht den Schlupf im Betrieb des Arbeitsgeräts (1). Das Arbeitsgerät (1) ist so ausgelegt, dass es bei Überschreiten eines Schlupfschwellwerts mindestens eine Maßnahme zur Abschwächung oder Unterbindung einer Auswirkung einer möglichen Reaktion des Werkzeugs (2) durchführt.

Fig. 3

EP 4 744 838 A1

**Beschreibung**

Die Erfindung betrifft ein handgeführtes Arbeitsgerät nach dem Oberbegriff des Anspruchs 1 und ein Verfahren zum Betrieb eines handgeführten Arbeitsgeräts nach dem Oberbegriff des Anspruchs 10.

Aus der WO 2023/195888 A1 ist ein handgeführtes Arbeitsgerät bekannt, bei dem die Kraftübertragung vom Motor auf das Werkzeug durch einen Riementrieb erfolgt. Der Schlupf des Riemens kann mittels eines Riemenschlupferkennungsmechanismus ermittelt werden. Hierfür wird der erwartete Kraftaufwand zur Beschleunigung der Motorachse von einer ersten Geschwindigkeit auf eine zweite Geschwindigkeit mit dem tatsächlichen Kraftaufwand hierfür verglichen. Bei derartigen handgeführten Arbeitsgeräten, die ein Werkzeug drehend antreiben, kann es bei Kontakt des drehenden Werkzeugs mit einem externen Gegenstand zu einer Reaktion des Werkzeugs, insbesondere zu einem Rückschlag des Werkzeugs, kommen. Hierin besteht eine Gefährdung für den Benutzer.

Der Erfindung liegt die Aufgabe zugrunde, ein gattungsgemäßes Arbeitsgerät derart weiterzubilden, dass das eine Gefährdung für den Benutzer aufgrund einer Reaktion des Werkzeugs bei Kontakt mit einem externen Gegenstand gering ist.

Diese Aufgabe wird durch ein handgeführtes Arbeitsgerät mit den Merkmalen des Anspruchs 1 gelöst.

Eine weitere Aufgabe der Erfindung liegt darin, ein Verfahren zum Betrieb eines handgeführten Arbeitsgeräts anzugeben, bei dem das Risiko beim Auftreten einer unerwünschten Reaktion des Werkzeugs bei Kontakt des drehenden Werkzeugs mit einem externen Gegenstand gering ist.

Diese Aufgabe wird durch ein Verfahren mit den Merkmalen des Anspruchs 10 gelöst.

Bei Kontakt des drehenden Werkzeugs mit einem externen Gegenstand kann es zu einer Reaktion des Werkzeugs kommen. Eine solche Reaktion kann ein Rückschlag des Werkzeugs sein. Bei dem Kontakt des drehenden Werkzeugs mit einem externen Gegenstand können Reaktionskräfte wirken. Der Rückschlag ist eine der am häufigsten auftretenden Reaktionskräfte. Bei einem Rückschlag wird das Werkzeug, insbesondere das handgeführte Arbeitsgerät, plötzlich und unkontrollierbar zum Benutzer geschleudert. Diesen Vorgang bezeichnet man auch als Kickback. Er ist mit einer Gefährdung für den Benutzer verbunden. Ein Rückschlag entsteht zum Beispiel, wenn das sich drehende Werkzeug eingeklemmt wird - vor allem im oberen Viertel - oder durch Reibungskontakt mit einem festen Gegenstand stark abgebremst wird.

Der Erfindung liegt die Erkenntnis zugrunde, dass bei einer unerwünschten Reaktion des Werkzeugs ein Schlupf des Kraftübertragungsmittels bei der Kraftübertragung auf das Werkzeug in erhöhtem Maße auftritt. Demnach kann die Detektion des Schlupfes, insbesondere des Werts des Schlupfes, zur Detektion eines Reaktionsereignisses, insbesondere eines Rückschlagereignisses, insbesondere eines Kickback-Ereignisses des Werkzeugs, insbesondere des handgeführten Arbeitsgeräts, genutzt werden.

Beim erfindungsgemäßen handgeführten Arbeitsgerät ist vorgesehen, dass das Arbeitsgerät den Schlupf, insbesondere den Wert des Schlupfs, des Kraftübertragungsmittels im Betrieb des Arbeitsgeräts überwacht. Insbesondere ist ein Schlupf des Kraftübertragungsmittels, das Kraft vom Motor auf das Werkzeug überträgt, je nach Gestaltung des Arbeitsgeräts sowohl an der Kontaktstelle des Kraftübertragungsmittels im Bereich des Motors als auch an der Kontaktstelle des Kraftübertragungsmittels im Bereich des Werkzeugs möglich. Der Schlupf ist insbesondere der Schlupf des Kraftübertragungsmittel gegenüber dem Motor und/oder dem Werkzeug. Das Arbeitsgerät ist so ausgelegt, dass es bei Überschreiten eines Schlupfschwellwerts mindestens eine Maßnahme zur Abschwächung oder Unterbindung einer Auswirkung einer möglichen Reaktion, insbesondere eines möglichen Rückschlags, des Werkzeugs durchführt.

"Schlupf" beschreibt grundlegend immer ein Phänomen des relativen Gleitens oder der Bewegungsunterschiede zwischen miteinander in Kontakt stehenden Komponenten. Mit "Schlupf" wird insbesondere das Abweichen der Geschwindigkeiten von miteinander in Reibkontakt stehenden mechanischen Elementen, insbesondere unter tangentialer Belastung, bezeichnet. Insbesondere wird vorliegend mit Schlupf das Abweichen der Geschwindigkeiten des Kraftübertragungsmittels und des Werkzeugs und/oder des Motors, insbesondere unter tangentialer Belastung, bezeichnet. Durch Überwachung des Schlupfs im Betrieb des Arbeitsgeräts kann auf einfache Weise bei Überschreiten des Schlupfschwellwerts auf das Vorliegen einer unerwünschten Reaktion, insbesondere eines Rückschlags, des Werkzeugs geschlossen werden. Ein unerwünschtes Reaktionsereignis, insbesondere Rückschlagereignis, insbesondere Kickback- Ereignis, kann auf einfache Weise detektiert werden. Eine Maßnahme zur Abschwächung oder Unterbindung einer Auswirkung einer unerwünschten Reaktion, insbesondere eines unerwünschten Rückschlags, des Werkzeugs kann nach Detektion des Ereignisses einfach und schnell durchgeführt werden.

In besonderer Weiterbildung der Erfindung umfasst das Arbeitsgerät einen Werkzeugsensor zur Detektion der Werkzeugdrehzahl des Werkzeugs. Insbesondere umfasst das Arbeitsgerät einen Motorsensor zur Detektion der Motordrehzahl des Motors. Insbesondere ist das handgeführte Arbeitsgerät so ausgelegt, dass es den Schlupf, insbesondere den Wert des Schlupfes des Kraftübertragungsmittels aus der Werkzeugdrehzahl und der Motordrehzahl ermittelt. Dadurch kann der Schlupf, insbesondere der Wert des Schlupfes, einfach und schnell ermittelt werden.

Insbesondere überträgt das Kraftübertragungsmittel die Kraft von dem Motor auf das Werkzeug mit einem Übersetzungsverhältnis. Insbesondere entspricht das Übersetzungsverhältnis dem Quotienten aus Motordrehzahl und Werkzeugdrehzahl bei schlupffreier Kraftübertragung der Kraft des Motors auf das Werkzeug mittels des Kraftübertragungsmittels. Demnach gilt für das Übersetzungsverhältnis i:

$$i = \frac{n_{Motor,schlupffrei}}{n_{Werkzeug,schlupffrei}},$$

wobei $n_{Motor, schlupffrei}$ die Motordrehzahl und $n_{Werkzeug, schlupffrei}$ die Werkzeugdrehzahl, jeweils im schlupffreien Fall ist. Ein Werkzeugdrehzahlprodukt P entspricht dem Produkt aus Übersetzungsverhältnis i und Werkzeugdrehzahl $n_{Werkzeug}$, auch wenn die Kraftübertragung der Kraft des Motors auf das Werkzeug nicht schlupffrei ist:

$$P = i \cdot n_{Werkzeug},$$

$n_{Werkzeug}$: Drehzahl des Wekzeugs, auch bei Schlupf,

Insbesondere errechnet das Arbeitsgerät den Schlupf aus dem Quotienten Q aus Motordrehzahl $n_{motor}$ und Werkzeugdrehzahlprodukt P:

$$Q = \frac{n_{Motor}}{P} = \frac{n_{Motor}}{i \cdot n_{Werkzeug}},$$

$n_{Motor}$: Drehzahl des Motors, auch bei Schlupf,

Der Schlupf, insbesondere der Wert des Schlupfes S entspricht der Differenz aus dem Quotienten Q und 1:

$$S = Q - 1 = \frac{n_{Motor}}{P} - 1 = \frac{n_{Motor}}{i \cdot n_{Werkzeug}} - 1$$

Der Schlupf S kann in % angegeben werden. Wenn die Kraft des Motors mittels des Kraftübertragungsmittels schlupffrei auf das Werkzeug übertragen wird, beträgt der Wert des Schlupfes S 0%. Wenn eine Reaktion des Werkzeugs infolge eines Kontakts des drehenden Werkzeugs mit einem externen Gegenstand, insbesondere ein Rückschlag, insbesondere ein Kickback, des Werkzeugs, stattfindet, wird die Werkzeugdrehzahl $n_{werkzeug}$ schnell reduziert. Der Motor wird aber weiterhin mit hoher Motordrehzahl $n_{motor}$ angetrieben. Dies führt zu einem schnellen Anstieg des Schlupfes, insbesondere des Werts des Schlupfes S. Insbesondere bewegt sich das Kraftübertragungsmittel, das insbesondere zumindest mittelbar das Werkzeug antreibt, in dieser Situation schneller als das Werkzeug oder der Motor selbst. Dies gilt insbesondere für die Bewegungsrichtung in Richtung um die Drehachse des Werkzeugs, bzw. des Motors, herum, insbesondere tangential zur Richtung der Werkzeugdrehachse, bzw. der Motordrehachse.

Insbesondere liegt der Schlupfschwellwert im Bereich von 1% bis 50%. Insbesondere liegt der Schlupfschwellwert im Bereich von 1% bis 10%. Insbesondere liegt der Schlupfschwellwert im Bereich von 2% bis 10%. Insbesondere beträgt der Schlupfschwellwert 50%, insbesondere 10%, insbesondere 2%, insbesondere 1%. Bei Überschreiten des Schlupfschwellwerts führt das Arbeitsgerät mindestens eine Maßnahme zur Abschwächung oder Unterbindung einer Auswirkung einer möglichen Reaktion des Werkzeugs durch.

In Weiterbildung der Erfindung ist das Arbeitsgerät so ausgelegt, dass der Schlupfschwellwert in Abhängigkeit des Werts des Schlupfes im Betrieb des Arbeitsgeräts ohne Kontakt des drehenden Werkzeugs mit einem externen Gegenstand bestimmt wird. Insbesondere findet hierbei eine Normierung statt. Es kann vorgesehen sein, dass der Schlupfschwellwert von 110% bis 300%, insbesondere von 120% bis 250%, insbesondere von 130% bis 200%, insbesondere mindestens 110%, insbesondere mindestens 120%, insbesondere mindestens 130%, insbesondere höchstens 300%, insbesondere höchstens 250%, insbesondere höchstens 200% des Werts des Schlupfes im Betrieb des Arbeitsgeräts ohne Kontakt des drehenden Werkzeugs mit einem externen Gegenstand beträgt. Dadurch kann der Schlupfschwellwert auch bei verschiedenen Einstellungen und Charakteristika des Kraftübertragungsmittels sinnvoll gewählt sein. Ist das Kraftübertragungsmittel beispielsweise ein Riemen und die Riemenspannung gering, so ist es sinnvoll, dass der Schlupfschwellwert groß gewählt ist. Denn bei geringer Riemenspannung ist der Wert des Schlupfes im Betrieb des Arbeitsgeräts ohne Kontakt des drehenden Werkzeugs mit einem externen Gegenstand bereits hoch. Eine Normierung auf diesen Normalwert des Schlupfes ist daher sinnvoll. Es kann auch vorgesehen sein, dass der Schlupfschwellwert in Abhängigkeit des Werts des Schlupfes beim Beschleunigen oder Bremsen definiert wird. Außerdem kann vorgesehen sein, dass der Schlupfschwellwert in Abhängigkeit des Werts des Schlupfes beim Arbeiten, insbesondere im Normalbetrieb mit konstanter Motordrehzahl, insbesondere beim Beschleunigen oder Bremsen bestimmt wird.

Insbesondere umfasst das Arbeitsgerät eine Steuereinheit. Die Steuereinheit überwacht im Betrieb des Arbeitsgeräts den Schlupf, insbesondere den Wert des Schlupfs. Insbesondere löst die Steuereinheit bei Überschreiten des Schlupfschwellwerts die Maßnahme zur Abschwächung oder Unterbindung einer Auswirkung der möglichen Reaktion, insbesondere des möglichen Rückschlags, des Werkzeugs aus. Dadurch werden die Informationen über das Vorliegen eines Reaktionsereignisses, insbesondere eines Rückschlagereignisses, insbesondere eines Kickback-Ereignisses, derjenigen Einheit zugeführt, die auch eine Reaktion des Arbeitsgeräts hierauf initiiert. Dies ermöglicht einen einfachen Aufbau des Arbeitsgeräts und eine schnelle Reaktion auf das Vorliegen eines Reaktionsereignisses.

Insbesondere umfasst die Maßnahme zur Abschwächung oder Unterbindung einer Auswirkung einer möglichen Reaktion des Werkzeugs, insbesondere des Arbeitsgeräts, ein Unterbrechen der Energieversorgung des Motors. Insbesondere umfasst die Maßnahme ein Bremsen des Motors und/oder des Werkzeugs. Aufgrund des Unterbrechens der Energiezufuhr des Motors und/oder des Bremsens des Motors wird das Werkzeug weniger stark oder gar nicht mehr angetrieben. Dadurch ist die Gefährdung des Benutzers bei Kontakt mit dem Werkzeug geringer. Noch weiter minimiert kann die Gefährdung des Benutzers durch das Bremsen des Werkzeugs werden.

Insbesondere umfasst das Arbeitsgerät eine Werkzeugbremseinrichtung. Die Werkzeugbremseinrichtung dient zum Bremsen des Werkzeugs. Insbesondere dient die Werkzeugbremseinrichtung zur Reduzierung der Drehzahl des sich drehenden Werkzeugs. Insbesondere ist das Arbeitsgerät, insbesondere die Steuereinheit, so ausgelegt, dass bei Überschreiten des Schlupfschwellwerts der Motor mittels der Motorbremseinrichtung und/oder das Werkzeug mittels der Werkzeugbremseinrichtung gebremst werden.

Insbesondere ist der Motor ein Elektromotor. Insbesondere wird der Elektromotor mittels einer Batterie, insbesondere mittels eines Akkus mit elektrischer Energie versorgt.

Insbesondere umfasst das Arbeitsgerät eine Motorbremseinrichtung. Die Motorbremseinrichtung dient zum Abbremsen des Motors. Die Motorbremseinrichtung kann ein Bremsen, insbesondere ein elektrisches Bremsen, des Motors bewirken. Insbesondere kann das Bremsen rekuperativ erfolgen. Insbesondere bewirkt die Motorbremseinrichtung ein Bremsen des Motors durch elektrisches Kurzschließen von Anschlüssen des Elektromotors. Dadurch wird der Elektromotor mit der größten durch eine elektrische Motorbremseinrichtung zu erzielenden Bremskraft gebremst. Dies bewirkt einen schnellstmöglichen durch eine elektrische Motorbremseinrichtung zu erzielenden Stillstand des Motors und in der Folge auch des Werkzeugs. Dadurch ist das Risiko bei einer unerwünschten Reaktion des Werkzeugs auf einen Kontakt des drehenden Werkzeugs mit einem externen Gegenstand möglichst klein.

Insbesondere ist das Kraftübertragungsmittel ein Riemen. Insbesondere ist das Kraftübertragungsmittel ein Treibriemen. Dadurch ist eine einfache und effiziente Übertragung der Kraft des Motors auf das Werkzeug mittels des Kraftübertragungsmittels möglich.

Beim erfindungsgemäßen Verfahren zum Betrieb eines handgeführten Arbeitsgeräts wird ein Schlupf im Betrieb des Arbeitsgeräts überwacht. Hierbei handelt es sich insbesondere um den Schlupf des Kraftübertragungsmittel gegenüber dem Motor und/oder dem Werkzeug. Insbesondere handelt es sich hierbei um den Schlupf des Kraftübertragungsmittels zwischen dem Motor und dem Werkzeug. Bei Überschreiten eines Schlupfschwellwerts wird mindestens eine Maßnahme zur Abschwächung oder Unterbindung einer Auswirkung einer möglichen Reaktion, insbesondere eines möglichen Rückschlags, des Werkzeugs durchgeführt. Insbesondere wird der Motor gebremst. Insbesondere wird das Werkzeug gebremst. Insbesondere werden der Motor und das Werkzeug gebremst. Dadurch ist das Risiko bei einer unerwünschten Reaktion des Werkzeugs, insbesondere die eines Rückschlags, insbesondere bei einem Kickback des Werkzeugs, minimiert.

Die vorstehend im Zusammenhang mit dem handgeführten Arbeitsgerät beschriebenen Merkmale können auch als Verfahrensmerkmale in Weiterbildung des erfindungsgemäßen Verfahrens vorgesehen sein.

Ein Ausführungsbeispiel der Erfindung wird im Folgenden anhand der Zeichnung erläutert. Es zeigen:

Fig. 1           eine schematische perspektivische Darstellung eines handgeführten Arbeitsgeräts,

Fig. 2 und Fig. 3    schematische Seitenansichten des handgeführten Arbeitsgeräts aus Fig. 1 und

Fig. 4           eine schematische Seitenansicht auf das Arbeitsgerät nach den Fig. 1 bis 3 ohne Abdeckung des Kraftübertragungsmittels durch ein Auslegergehäuse und

Fig. 5           eine schematische Darstellung eines Teils eines Schaltkreises des Arbeitsgeräts nach den Fig. 1 bis 4.

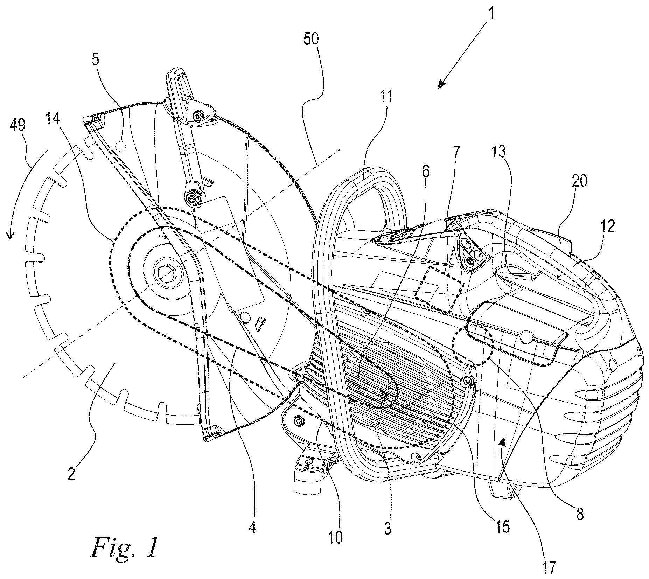

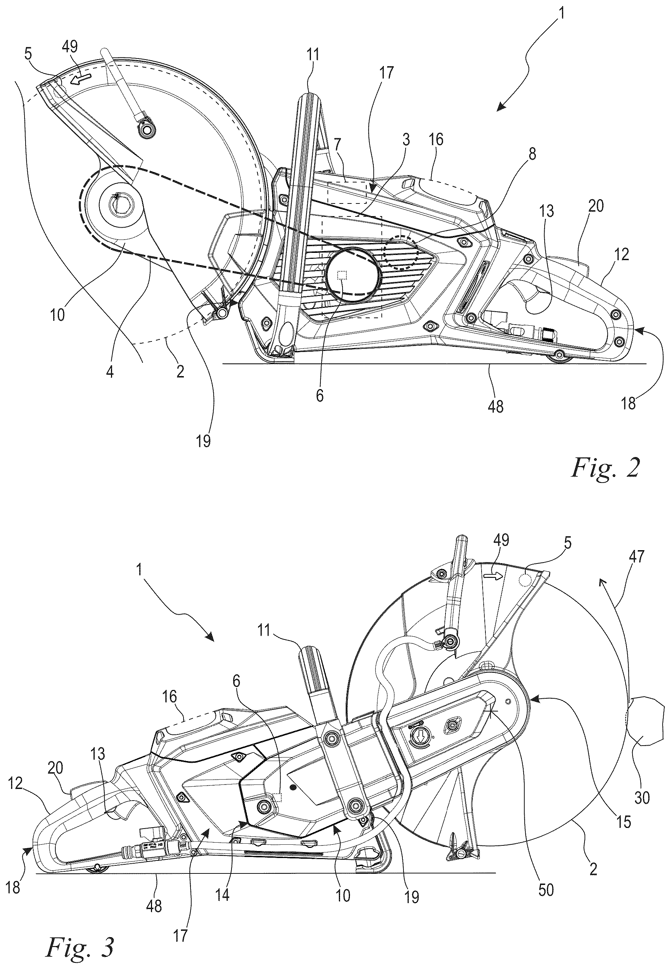

Fig. 1 zeigt ein handgeführtes Arbeitsgerät 1. Im Ausführungsbeispiel ist das handgeführte Arbeitsgerät 1 ein Trennschleifer. In alternativer Ausgestaltung der Erfindung kann es sich beim Arbeitsgerät 1 beispielsweise auch um eine Motorkettensäge, einen Freischneider, einen Gehölzschneider oder um ein ähnliches Arbeitsgerät mit drehend angetriebenem Werkzeug handeln. Das Arbeitsgerät 1 ist handgeführt, insbesondere handgetragen. Das Arbeitsgerät 1 wird im Betrieb vom Bediener getragen und geführt. Das Arbeitsgerät 1 weist ein Gehäuse 2 auf. Das Arbeitsgerät 1 umfasst einen Motor 3. Der Motor 3 ist im Gehäuse 17 angeordnet. In Fig. 1 ist der Motor 3 durch das Gehäuse 17 verdeckt. In Fig. 2 ist der Motor 3 schematisch durch ein gestricheltes Viereck dargestellt. Im vorliegenden Ausführungsbeispiel ist der Motor 3 als Elektromotor ausgebildet. In einer alternativen Ausführung kann der Motor 3 auch als Verbrennungsmotor ausgebildet sein. Im Ausführungsbeispiel ist der Motor 3 ein Gleichstrommotor, insbesondere ein bürstenloser Gleichstrommotor. Ganz insbesondere ist der Motor 3 ein elektronisch kommutierter Motor. Der elektronisch kommutierte Motor wird auch als EC-Motor bezeichnet. Hierin wandelt eine Steuerelektronik den Gleichstrom in einen passenden Drehstrom um. Die Drehstromwicklung wird durch eine geeignete Schaltung so angesteuert, dass sie ein wanderndes magnetisches Feld erzeugt, welches den Rotor mitzieht. Der EC-Motor ist insbesondere 3-phasig.

Das Arbeitsgerät 1 umfasst einen Akku 16. Der Akku 16 dient zur Versorgung des Motors 3 mit elektrischer Energie. Der Akku 16 ist in Fig. 2 durch gestrichelte Linie schematisch dargestellt. Der Akku 16 ist in einem Akkuschacht des Gehäuses 17 aufgenommen.

Das Arbeitsgerät 1 umfasst ein Werkzeug 2. Der Motor 3 dient zum Antrieb des Werkzeugs 2. Das Werkzeug 2 ist drehend angetrieben. Der Motor 3 treibt das Werkzeug 2 im Betrieb in einer in den Fig. 1 bis 4 eingezeichneten Drehrichtung 49 an. Im Ausführungsbeispiel ist das Werkzeug 2 eine Trennscheibe. Es kann aber auch vorgesehen sein, dass das Werkzeug 3 eine Sägekette, ein Sägeblatt oder ein rotierbares Messer ist. Im Ausführungsbeispiel ist das Werkzeug 2 um eine Drehachse 50 rotierbar gelagert.

Wie in den Fig. 2 bis 4 dargestellt, erstreckt sich das Gehäuse 17 von einem hinteren Ende 18 bis zu einem vorderen Ende 19. Das hintere Ende 18 des Gehäuses 17 ist im Betrieb dem Bediener zugewandt. Das vordere Ende 19 des Gehäuses 17 ist im Betrieb dem Bediener abgewandt. Das Arbeitsgerät 1 umfasst einen hinteren Handgriff 12. Der hintere Handgriff 12 bildet das hintere Ende 18. Der hintere Handgriff 12 ist durch das Gehäuse 17 gebildet. Am hinteren Handgriff 12 ist ein Bedienelement 13 zur Ansteuerung des Motors 3 angeordnet. Das Bedienelement 13 ist im Ausführungsbeispiel als Bedienhebel ausgebildet. Ferner umfasst das Arbeitsgerät 1 ein Sperrelement 20. Das Sperrelement 20 sperrt in einer Sperrstellung das Bedienelement 13 und gibt in einer Freigabestellung das Bedienelement 13 zur Betätigung frei. Das Sperrelement 20 ist vorzugsweise als Sperrhebel ausgebildet. Das Arbeitsgerät 1 umfasst einen vorderen Haltegriff 11. Der vordere Haltegriff 11 ist zum Führen des Arbeitsgeräts 1 vorgesehen. Der vordere Haltegriff 11 ist zum Tragen des Arbeitsgeräts 1 vorgesehen. Der vordere Haltegriff 11 ist in etwa am vorderen Ende 19 des Gehäuses 2 festgelegt. Der vordere Haltegriff 11 ist insbesondere als Griffrohr ausgebildet. Auch andere Ausgestaltungen des vorderen Haltegriffs 11 sind denkbar.

Wie insbesondere in den Fig. 1, 3 und 4 dargestellt, umfasst das Arbeitsgerät 1 einen Ausleger 10. Der Ausleger 10 besitzt ein proximales Ende 14 und ein distales Ende 15. Das proximale Ende 14 ist dem hinteren Ende 18 des Gehäuses 17 zugewandt. Das distale Ende 15 ist dem hinteren Ende 18 des Gehäuses 17 abgewandt. Das proximale Ende 14 ist im Betrieb dem Benutzer zugewandt. Das distale Ende 15 ist im Betrieb dem Benutzer abgewandt. Der Ausleger 10 ist an dem Gehäuse 17 festgelegt. Der Ausleger 10 ist insbesondere im Bereich des vorderen Endes 19 des Gehäuses 17 festgelegt. Der Ausleger 10 ragt über das vordere Ende 19 des Gehäuses 2 hinaus. Der Ausleger 10 erstreckt sich mit seinem distalen Ende 15 von dem vorderen Ende 19 des Gehäuses 17 weg. Das distale Ende 15 des Auslegers 10 ist ein freies Ende. Das Werkzeug 2 ist an dem distalen Ende 15 des Auslegers 10 angeordnet. Das Werkzeug 2 ist an dem distalen Ende 15 des Auslegers 10 drehbar gelagert.

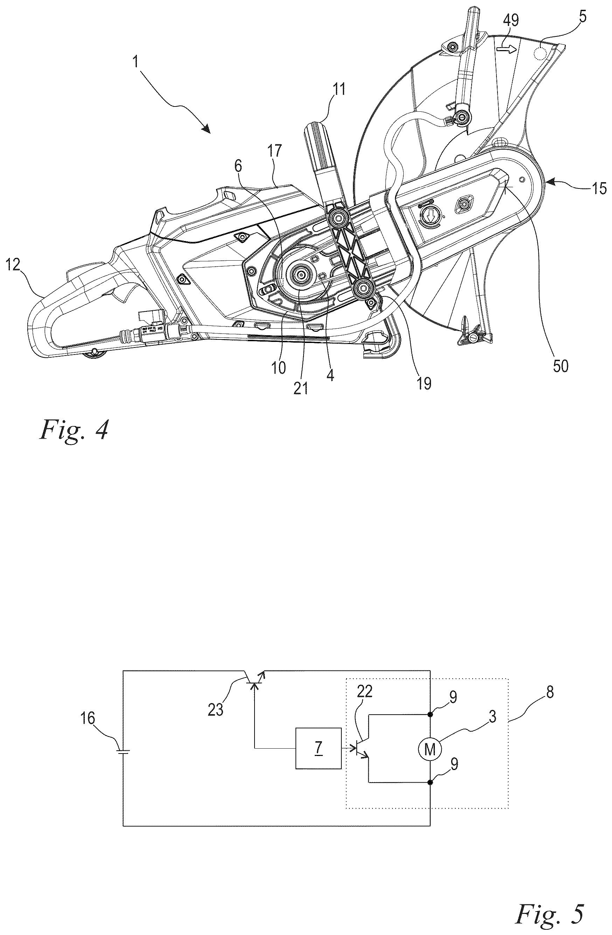

Wie in den Fig. 1, 2 und 4 dargestellt, umfasst das Arbeitsgerät 1 ein Kraftübertragungsmittel 4. Im Ausführungsbeispiel ist das Kraftübertragungsmittel 4 als Riemen, insbesondere als Treibriemen, ausgebildet. Der Motor 3 ist über das Kraftübertragungsmittel 4 mit dem Werkzeug 2 wirkverbunden. Das Kraftübertragungsmittel 4 dient zur Kraftübertragung von dem Motor 3 auf das Werkzeug 2, insbesondere mittels Reibkontakt. Das Kraftübertragungsmittel 4 dient zur Drehzahl- und Drehmomentübertragung zwischen dem Motor 3 und dem Werkzeug 2, insbesondere von dem Motor 3 auf das Werkzeug 2. Wie in Fig. 4 dargestellt, umfasst das Arbeitsgerät 1 eine Motorriemenscheibe 21. Die Motorriemenscheibe 21 ist von dem Motor 3 angetrieben. Im Ausführungsbeispiel ist die Motorriemenscheibe 21 unmittelbar auf der Welle des Motors 3 angeordnet. Die Motorriemenscheibe 21 ist drehfest mit dem Motor 3, insbesondere mit der Welle des Motors 3 verbunden. Die Motorriemenscheibe 21 ist im Bereich des proximalen Endes 14 des Auslegers 10 am Gehäuse 17 angeordnet. Das Arbeitsgerät 1 umfasst eine nicht näher dargestellte Werkzeugriemenscheibe, die an dem distalen Ende 15 des Auslegers 10 angeordnet ist. Die Werkzeugriemenscheibe ist mit dem Werkzeug 2 bezüglich einer Drehung um die Drehachse 50 des Werkzeugs 2 drehfest verbunden. Die Motorriemenscheibe 21 ist mit der nicht dargestellten Werkzeugriemenscheibe über das als Riemen ausgebildete Kraftübertragungsmittel 4 wirkverbunden. Das Kraftübertragungsmittel 4 wird im Betrieb des Arbeitsgeräts 1 vom Motor 3 über die Motorriemenscheibe 21 zur Drehung angetrieben. Die Kraft des Motors 3 wird von der Motorriemenscheibe 21 auf das als Riemen ausgebildete Kraftübertragungsmittel 4 mittels Reibkraft übertragen. Dadurch wird der geschlossen umlaufende Riemen angetrieben. Das als Riemen ausgebildete Kraftübertragungsmittel 4 treibt durch Reibkraftübertragung die Werkzeugriemenscheibe an. Aufgrund der drehfesten Verbindung zwischen der Werkzeugriemenscheibe und dem Werkzeug 2 wird dadurch das Werkzeug 2 in eine Drehbewegung versetzt. Das Werkzeug 2 dreht sich in Drehrichtung 49 um die Drehachse 50.

Wenn bei einem Antrieb des Kraftübertragungsmittels 4 durch den Motor 3 das Werkzeug 2 in seiner Drehbewegung gebremst oder blockiert ist, tritt zwischen dem Kraftübertragungsmittel 4 und dem Motor 3, insbesondere der Motorriemenscheibe 21, und/oder dem Werkzeug 2, insbesondere der Werkzeugriemenscheibe, ein Schlupf auf. An der Kontaktfläche zwischen der Motorriemenscheibe 21, bzw. der Kontaktfläche zwischen der Werkzeugriemenscheibe, und dem Kraftübertragungsmittel 4 bewegt sich das Kraftübertragungsmittel 4 dann mit größerer oder kleinerer Geschwindigkeit als die Motorriemenscheibe 21, bzw. die Werkzeugriemenscheibe.

Im Ausführungsbeispiel ist der Durchmesser der Motorriemenscheibe 21 kleiner als der Durchmesser der Werkzeugriemenscheibe. Daher ist der Umschlingungswinkel des Riemens an der Werkzeugriemenscheibe größer als an der Motorriemenscheibe 21. Dies hat zur Folge, dass ein Schlupf eher die Kontaktfläche zwischen Riemen und Motorriemenscheibe 21 betrifft, als die Kontaktfläche zwischen Riemen und Werkzeugriemenscheibe.

Im Ausführungsbeispiel sind die Motorriemenscheibe 21 und die Werkzeugriemenscheibe in einer gemeinsamen Ebene angeordnet, in der der Riemen umläuft. Die Durchmesser der Riemenscheiben sind in dieser gemeinsamen Ebene gemessen. Als Durchmesser einer Riemenscheibe wird der wirksame Durchmesser der Riemenscheibe bezeichnet. Dies ist der Durchmesser, an dem der Riemen oder das Band tatsächlich mit der Riemenscheibe in Berührung kommt. Der wirksame Durchmesser ist entscheidend für die Berechnung der Drehmomente und der Geschwindigkeitsverhältnisse.

Das Arbeitsgerät 1 ist so ausgelegt, dass es einen Schlupf zwischen dem Kraftübertragungsmittel 4 und dem Motor 3, insbesondere der Motorriemenscheibe 21, und/oder zwischen dem Kraftübertragungsmittel 4 und dem Werkzeug 2, insbesondere der Werkzeugriemenscheibe, ermittelt. Insbesondere ist das Arbeitsgerät 1 so ausgelegt, dass es einen Schlupf des Kraftübertragungsmittels 4, das Kraft zwischen dem Motor 3 und dem Werkzeug 2 überträgt, ermittelt. Das Arbeitsgerät 1 überwacht den Wert des Schlupfs im Betrieb des Arbeitsgeräts 1. Das Arbeitsgerät 1 ist so ausgelegt, dass es bei Überschreiten eines Schlupfschwellwerts mindestens eine Maßnahme zur Abschwächung oder Unterbindung einer Auswirkung einer möglichen Reaktion des Werkzeugs bei einem Kontakt des drehenden Werkzeugs 2 mit einem externen Gegenstand 30 (Fig. 3) durchführt.

Zu einer unerwünschten Reaktion des Werkzeugs kann es insbesondere dann kommen, wenn das Werkzeug 2 eingeklemmt wird oder durch Reibungskontakt mit dem festen Gegenstand 30 stark abgebremst wird. Bei einem solchen Ereignis kann das Werkzeug 2, insbesondere das gesamte Arbeitsgerät 1 in die in Fig. 3 eingezeichnete Richtung 47 beschleunigt werden. Das Werkzeug 2 erfährt dann bezüglich seiner Drehrichtung 49 einen Rückschlag in die Richtung 47. Dies wird auch als Kickback bezeichnet. Das Arbeitsgerät 1, insbesondere das Werkzeug 2 wird dann plötzlich und unkontrollierbar zum Benutzer geschleudert. Hierdurch besteht eine Gefährdung. Bei der Durchführung einer Maßnahme zur Abschwächung oder Unterbindung einer Auswirkung eines solchen Rückschlagereignisses wird die Gefährdung des Benutzers durch das Arbeitsgerät 1 verringert.

Wie beispielsweise in Fig. 3 dargestellt, ist das Arbeitsgerät 1 auf einer Horizontalebene 48 abstellbar. Wenn das drehende Werkzeug 2 in dieser Abstellposition des Arbeitsgeräts 1 mit dem externen Gegenstand 30 an der am weitesten von dem hinteren Ende 18 des Gehäuses 17 entfernten Stelle in Kontakt kommt und es hierbei zu einem Rückschlag kommt, würde das Werkzeug 2, insbesondere das Arbeitsgerät 1 in Richtung 47 beschleunigt. Die Richtung 47 verliefe in Richtung weg von der Horizontalebene 48 nach oben. Da der Benutzer das Arbeitsgerät am hinteren Handgriff 12 und/oder am vorderen Handgriff 11 festhält, würde das Arbeitsgerät beim Rückschlag auch eine Drehbewegung, bei der das Werkzeug 2 auf den Benutzer zu beschleunigt würde, vollführen. Die Richtung 47 folgt einer Bogenlinie von der Horizontalebene 48 weg nach oben und in Richtung auf den Benutzer zu. Hierin, in einem solchen Rückschlag, kann eine Reaktion des Werkzeugs 2 auf einen Kontakt mit dem externen Gegenstand 30 bestehen. Die Auswirkung dieser Reaktion könnte eine Gefährdung des Benutzers sein. Eine solche Auswirkung soll abgeschwächt oder unterbunden werden.

Wie in den Fig. 1 bis 4 schematisch mit gepunkteter Linie dargestellt, umfasst das Arbeitsgerät 1 einen Werkzeugsensor 5. Der Werkzeugsensor 5 dient zur Detektion der Werkzeugdrehzahl des Werkzeugs 2. Weiterhin umfasst das Arbeitsgerät 1 einen in ähnlicher Weise schematisch dargestellten Motorsensor 6. Der Motorsensor 6 dient zur Detektion der Motordrehzahl des Motors 3. Es kann vorgesehen sein, dass der Werkzeugsensor 5 die Drehzahl der Werkzeugriemenscheibe detektiert. Ebenso kann vorgesehen sein, dass der Motorsensor 6 die Drehzahl der Motorriemenscheibe 21 detektiert. Das Arbeitsgerät 1 ist so ausgelegt, dass es den Schlupf des Kraftübertragungsmittels 4 aus der Werkzeugdrehzahl und der Motordrehzahl ermittelt.

Das Arbeitsgerät 1 umfasst eine in den Fig. 1 und 2 schematisch dargestellte Steuereinheit 7. Die vom Motorsensor 6 ermittelte Motordrehzahl und die von dem Werkzeugsensor 5 ermittelte Werkzeugdrehzahl werden an die Steuereinheit 7 übermittelt. Die Steuereinheit 7 berechnet aus der Werkzeugdrehzahl und der Motordrehzahl den Schlupf bzw. den Wert des Schlupfes. Auf diese Weise überwacht die Steuereinheit 7 den Schlupf im Betrieb des Arbeitsgeräts 1. Bei Überschreiten des Schlupfschwellwerts löst die Steuereinheit 7 die Maßnahme zur Abschwächung oder Unterbindung einer Auswirkung einer möglichen Reaktion des Werkzeugs aus.

Das Kraftübertragungsmittel 4 überträgt die Kraft von dem Motor 3 auf das Werkzeug 2 mit einem Übersetzungsverhältnis i. Das Übersetzungsverhältnis i entspricht im Ausführungsbeispiel dem Quotienten aus dem Durchmesser $d_{Werkzeugriemenscheibe}$ der Werkzeugriemenscheibe und dem Durchmesser $d_{Motorriemenscheibe}$ der Motorriemenscheibe 21:

$$i = \frac{d_{Werkzeugriemenscheibe}}{d_{Motorriemenscheibe}}$$

Ein Werkzeugdrehzahlprodukt P entspricht dem Produkt aus Übersetzungsverhältnis i und Werkzeugdrehzahl $n_{Werkzeug}$:

$$P = i \cdot n_{Werkzeug}.$$

Das Arbeitsgerät 1, insbesondere die Steuereinheit 7 bildet den Quotienten Q aus Motordrehzahl $n_{Motor}$ und Werkzeugdrehzahlprodukt P:

$$Q = \frac{n_{Motor}}{P} = \frac{n_{Motor}}{i \cdot n_{Werkzeug}} = \frac{d_{Motorriemenscheibe} \cdot n_{Motor}}{d_{Werkzeugriemenscheibe} \cdot n_{Werkzeug}}.$$

Der Schlupf, insbesondere der Wert des Schlupfes S entspricht der Differenz aus dem Quotienten Q und 1:

$$S = Q - 1 = \frac{n_{Motor}}{P} - 1 = \frac{n_{Motor}}{i \cdot n_{Werkzeug}} - 1 = \frac{d_{Motorriemenscheibe} \cdot n_{Motor}}{d_{Werkzeugriemenscheibe} \cdot n_{Werkzeug}} - 1.$$

Der Schlupfschwellwert liegt im Bereich von 1% bis 50%, insbesondere im Bereich von 1% bis 10%, insbesondere im Bereich von 2% bis 10%. Der Schlupfschwellwert beträgt insbesondere 50%, insbesondere 10%, insbesondere 2%, insbesondere 1%. Im Ausführungsbeispiel beträgt der Schlupfschwellwert in der Regel 2%. Insbesondere ist der Schlupfschwellwert in der Steuereinheit 7 hinterlegt.

Es kann aber auch vorgesehen sein, dass der Schlupfschwellwert in Abhängigkeit des Werts des Schlupfes im lastfreien Normalbetrieb, also bei Betrieb des Arbeitsgeräts 1 mit Vollgas ohne Kontakte des drehenden Werkzeugs 2 mit einem externen Gegenstand 30, bestimmt wird. Der Schlupfschwellwert wird gewissermaßen dynamisch angepasst. Je nachdem, wie groß ein Referenzwert für den Schlupf im lastfreien Normalbetrieb des Arbeitsgeräts ist, wird die Größe des Schlupfschwellwerts gewählt. Wenn der Referenzwert groß ist, wird auch der Schlupfschwellwert groß gewählt. Wenn der Referenzwert klein ist, wird der Schlupfschwellwert entsprechend klein gewählt. Der Referenzwert wird über einen bestimmten Zeitraum ermittelt. Beispielsweise kann der Mittelwert der Schlupfwerte über einen Zeitraum von 5 Sekunden bis 30 Sekunden ermittelt werden. Insbesondere beträgt der Schlupfschwellwert von 110% bis 300%, insbesondere von 120% bis 250%, insbesondere von 130% bis 200%, insbesondere mindestens 110%, insbesondere mindestens 120%, insbesondere mindestens 130%, insbesondere höchstens 300%, insbesondere höchstens 250%, insbesondere höchstens 200% des Referenzwerts.

Es kann vorgesehen sein, dass der Referenzwert nach jeder Inbetriebnahme des Arbeitsgeräts 1 neu ermittelt wird. Insbesondere kann vorgesehen sein, dass der Referenzwert immer dann neu bestimmt wird, wenn das Werkzeug 2 lastfrei läuft.

Im Ausführungsbeispiel ist das als Riemen ausgebildete Kraftübertragungsmittel 4 zwischen dem Motor 3 und dem Werkzeug 2, insbesondere zwischen der Motorriemenscheibe 21 und der Werkzeugriemenscheibe, gespannt. Der Umschlingungswinkel, mit dem das Kraftübertragungsmittel 4 im Bereich des Werkzeugs 2 anliegt und Kraft auf das Werkzeug 2 überträgt, ist größer als der Umschlingungswinkel, mit dem das Kraftübertragungsmittel 4 im Bereich des Motors 3 anliegt und mit dem der Motor 3 auf das Kraftübertragungsmittel 4 Kraft überträgt. Dies hat gemäß der Euler-Eytelwein-Formel zur Folge, dass der Schlupf des Kraftübertragungsmittels 4 im Bereich des Motors 3 auftritt. In anderen Worten, im Falle einer Reduzierung der Werkzeugdrehzahl wird das Kraftübertragungsmittel 4 im Bereich des Motors 3 langsamer drehen als das kraftübertragende Element des Motors 3, insbesondere als die Motorriemenscheibe 21. Im Ausführungsbeispiel wird demnach die Motorriemenscheibe 21 schneller drehen als das an der Motorriemenscheibe 21 anliegende Kraftübertragungsmittel 4. Der Umschlingungswinkel ist hierbei die entscheidende Größe. Der Umschlingungswinkel ist im Bereich des Motors 3 bzw. an der Motorriemenscheibe 21 kleiner als im Bereich des Werkzeugs 2 bzw. der Werkzeugriemenscheibe, weil der Durchmesser der Werkzeugriemenscheibe größer ist als der Durchmesser der Motorriemenscheibe 21. Wenn der Durchmesser der Werkzeugriemenscheibe kleiner ist als der Durchmesser der Motorriemenscheibe 21, tritt der Schlupf des Kraftübertragungsmittels 4 im Bereich des Werkzeugs 2 bzw. an der Werkzeugriemenscheibe auf.

Das handgeführte Arbeitsgerät 1, insbesondere die Steuereinheit 7, ist so ausgelegt, dass bei Überschreiten des Schlupfschwellwerts mindestens eine Maßnahme zur Abschwächung oder Unterbindung einer Auswirkung einer möglichen Reaktion des Werkzeugs durchgeführt wird. Die Maßnahme umfasst im Ausführungsbeispiel ein Unterbrechen der Energieversorgung des Motors 3. In Fig. 5 ist ein Schalter 23 dargestellt. Durch Öffnen des Schalters 23 lässt sich die Energieversorgung des Motors 3 unterbrechen. Im Ausführungsbeispiel ist der Schalter 23 ein Feldeffekttransistor, insbesondere ein MOSFET (Metal-Oxide-Semiconductor Field-Effect Transistor, Metall-Oxid-Halbleiter-Feldeffekttransistor). Der Schalter 23 ist von der Steuereinheit 7 ansteuerbar.

Weiterhin umfasst die Maßnahme ein Bremsen des Motors 3. Im Ausführungsbeispiel geschieht das Bremsen des Motors 3 elektrisch. Für den Fall eines Verbrennungsmotors kann auch ein mechanisches Bremsen vorgesehen sein.

Das Arbeitsgerät 1 umfasst eine Motorbremseinrichtung 8, wie in Fig. 5 schematisch dargestellt. Die Motorbremseinrichtung 8 dient zum Bremsen des Motors 3. Im Ausführungsbeispiel bremst die Motorbremseinrichtung 8 den Motor 3 elektrisch. Insbesondere kann hierbei Energie rekuperiert werden. Im Ausführungsbeispiel ist vorgesehen, dass das Bremsen des Motors 3 mittels der Motorbremseinrichtung 8 durch elektrisches Kurzschließen von Anschlüssen 9 des Motors 3 bewirkt wird. Hierfür ist im Ausführungsbeispiel ein Schalter 22 vorgesehen. Mittels des Schalters 22 lassen sich die beiden elektrischen Anschlüsse 9 des Motors 3 miteinander elektrisch verbinden. Im Normalbetrieb ist der Schalter 22 geöffnet. Die beiden Anschlüsse 9 sind nicht miteinander kurzgeschlossen. Wenn die Motorbremseinrichtung 8 aktiviert wird, beispielsweise als Maßnahme zur Abschwächung oder Unterbindung einer Auswirkung einer Reaktion des Werkzeugs 2, wird der Schalter 22 geschlossen. Dadurch sind die beiden Anschlüsse 9 des Motors 3 miteinander kurzgeschlossen und die Motorbremseinrichtung 8 bremst mit der ihr maximal zur Verfügung stehende Stärke. In der Regel wird der Schalter 23 vor dem Schließen des Schalters 22 oder gleichzeitig mit dem Schließen des Schalters 22 geöffnet. Im Ausführungsbeispiel ist der Schalter 22 ein Feldeffekttransistor, insbesondere ein MOSFET (Metal-Oxide-Semiconductor Field-Effect Transistor, Metall-Oxid-Halbleiter-Feldeffekttransistor). Der Schalter 22 ist von der Steuereinheit 7 ansteuerbar.

Wenn die Steuereinheit 7 aus den ihr von dem Motorsensor 6 und dem Werkzeugsensor 7 Drehzahlen und dem in ihr hinterlegten Übersetzungsverhältnis i einen Wert für den Schlupf ermittelt, der oberhalb des Schlupfschwellwerts liegt, bewirkt die Steuereinheit 7 ein Öffnen des Schalters 23 und ein Schließen des Schalters 22.

Im Ausführungsbeispiel ist das Arbeitsgerät 1 so ausgelegt, dass es bei Überschreiten des Schlupfschwellwerts als Maßnahme zur Abschwächung oder Unterbindung einer Auswirkung einer möglichen Reaktion des Werkzeugs 2 den Motor 3 mittels der Motorbremseinrichtung 8 durch elektrisches Kurzschließen der Anschlüsse 9 des Motors 3 bewirkt. In Fig. 5 ist der Motor 3 als Gleichstrommotor dargestellt. Es kann aber auch ein EC-Motor eingesetzt werden.

Zusätzlich kann vorgesehen sein, dass die Maßnahme zur Abschwächung oder Unterbindung der Auswirkung einer möglichen Reaktion des Werkzeugs 2 ein Bremsen des Werkszeugs 2 umfasst. Das Bremsen des Werkzeugs kann als alternative oder zusätzliche Maßnahme vorgesehen sein. Es kann vorgesehen sein, dass das Bremsen des Werkzeugs 2 mechanisch erfolgt. Insbesondere erfolgt das Bremsen des Werkzeugs 2 elektrisch, insbesondere induktiv.

Beim Verfahren zum Betrieb des handgeführten Arbeitsgeräts 1 wird der Schlupf des Kraftübertragungsmittels 4 zwischen dem Motor 3 und dem Werkzeug 2 im Betrieb des Arbeitsgeräts 1 überwacht. Bei Überschreiten des Schlupfschwellwerts wird zumindest eine Maßnahme zur Abschwächung oder Unterbindung einer Auswirkung einer möglichen Reaktion des Werkzeugs 2 durchgeführt. Insbesondere wird der Motor 3 gebremst. Zusätzlich oder alternativ kann das Werkzeug 2 gebremst werden.

**Patentansprüche**

1. Handgeführtes Arbeitsgerät umfassend:

   - ein Werkzeug (2),
   - einen Motor (3) zum drehenden Antrieb des Werkzeugs (2) und
   - ein Kraftübertragungsmittel (4) zur Kraftübertragung von dem Motor (3) auf das Werkzeug (2) mittels Reibkontakt,

   wobei es bei Kontakt des drehenden Werkzeugs (2) mit einem externen Gegenstand (30) zu einer Reaktion des Werkzeugs (2) kommen kann, wobei das Arbeitsgerät (1) so ausgelegt ist, dass es einen Schlupf des Kraftübertragungsmittels (4) zwischen dem Motor (3) und dem Werkzeug (2) ermittelt, **dadurch gekennzeichnet, dass** das Arbeitsgerät (1) den Schlupf im Betrieb des Arbeitsgeräts (1) überwacht, und dass das Arbeitsgerät (1) so ausgelegt ist, dass es bei Überschreiten eines Schlupfschwellwerts mindestens eine Maßnahme zur Abschwächung oder Unterbindung einer Auswirkung einer möglichen Reaktion des Werkzeugs (2) durchführt.

2. Arbeitsgerät nach Anspruch 1,
   **dadurch gekennzeichnet, dass** das Arbeitsgerät (1) einen Werkzeugsensor (5) zur Detektion der Werkzeugdrehzahl des Werkzeugs (2) umfasst, dass das Arbeitsgerät (1) einen Motorsensor (6) zur Detektion der Motordrehzahl des Motors (3) umfasst, und dass das Arbeitsgerät (1) den Schlupf des Kraftübertragungsmittels (4) aus der Werkzeugdrehzahl und der Motordrehzahl ermittelt.

3. Arbeitsgerät nach Anspruch 1 oder 2,
   **dadurch gekennzeichnet, dass** das Kraftübertragungsmittel (4) die Kraft von dem Motor (3) auf das Werkzeug (2) mit einem Übersetzungsverhältnis überträgt, dass ein Werkzeugdrehzahlprodukt dem Produkt aus Übersetzungsverhältnis und Werkzeugdrehzahl entspricht, und dass das Arbeitsgerät (1) den Schlupf aus dem Quotienten aus Motordrehzahl und Werkzeugdrehzahlprodukt errechnet, und insbesondere dass der Wert des Schlupfes der Differenz aus dem Quotienten und 1 entspricht.

4.  Arbeitsgerät nach einem der Ansprüche 1 bis 3,
    **dadurch gekennzeichnet, dass** der Schlupfschwellwert im Bereich von 1% bis 50%, insbesondere im Bereich von 1% bis 10%, insbesondere im Bereich von 2% bis 10% liegt.

5.  Arbeitsgerät nach einem der Ansprüche 1 bis 4,
    **dadurch gekennzeichnet, dass** der Schlupfschwellwert in Abhängigkeit des Werts des Schlupfes im Betrieb des Arbeitsgeräts (1) ohne Kontakt des drehenden Werkzeugs (2) mit einem externen Gegenstand (30) bestimmt wird.

6.  Arbeitsgerät nach einem der Ansprüche 1 bis 5,
    **dadurch gekennzeichnet, dass** die Maßnahme ein Bremsen des Motors (3) und/oder des Werkzeugs (2) umfasst.

7.  Arbeitsgerät nach einem der Ansprüche 1 bis 6,
    **dadurch gekennzeichnet, dass** der Motor (3) ein Elektromotor ist.

8.  Arbeitsgerät nach den Ansprüchen 6 und 7,
    **dadurch gekennzeichnet, dass** das Arbeitsgerät (1) eine Motorbremseinrichtung (8) für den Motor (3) umfasst, dass die Motorbremseinrichtung (8) ein elektrisches Bremsen des Motors (3), insbesondere durch elektrisches Kurzschließen von Anschlüssen (9) des Elektromotors, bewirkt.

9.  Arbeitsgerät nach einem der Ansprüche 1 bis 8,
    **dadurch gekennzeichnet, dass** das Kraftübertragungsmittel (4) ein Riemen, insbesondere ein Treibrieben, ist.

10. Verfahren zum Betrieb eines handgeführten Arbeitsgeräts (1) umfassend ein Werkzeug (2), einen Motor (3) zum drehenden Antrieb des Werkzeugs (2) und ein Kraftübertragungsmittel (4) zur Kraftübertragung von dem Motor (3) auf das Werkzeug (2) mittels Reibkontakt, wobei es bei Kontakt des drehenden Werkzeugs (2) mit einem externen Gegenstand (30) zu einer Reaktion des Werkzeugs (2) kommen kann,
    **dadurch gekennzeichnet, dass** ein Schlupf des Kraftübertragungsmittels (4) zwischen dem Motor (3) und dem Werkzeug (2) im Betrieb des Arbeitsgeräts (1) überwacht wird, und dass bei Überschreiten eines Schlupfschwellwerts mindestens eine Maßnahme zur Abschwächung oder Unterbindung einer Auswirkung einer möglichen Reaktion des Werkzeugs (2) durchgeführt wird, insbesondere dass der Motor (3) und/oder das Werkzeug (2) gebremst werden.

Fig. 1

Fig. 2

Fig. 3

Fig. 4

Fig. 5

**Europäisches Patentamt**
**European Patent Office**
**Office européen des brevets**

# EUROPÄISCHER RECHERCHENBERICHT

Nummer der Anmeldung

EP 25 21 5528

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2023/195888 A1 (HUSQVARNA AB [SE]) 12. Oktober 2023 (2023-10-12) <br> * Seite 1, Zeile 23 - Zeile 28 * <br> * Seite 9, Zeile 3 - Zeile 11 * <br> * Seite 9, Zeile 12 - Zeile 21 * <br> * Seite 23, Zeile 25 - Zeile 30 * <br> * Abbildungen 1,2 * <br> ----- | 1,2,4, 7-9 | INV. <br> B25F5/00 <br> B27B17/08 <br> F16H7/00 <br> G01M13/023 |
| A | JP 2014 116994 A (OKUMA MACHINERY WORKS LTD) 26. Juni 2014 (2014-06-26) <br> * das ganze Dokument * <br> ----- | 1-10 | |

RECHERCHIERTE SACHGEBIETE (IPC)

B25F
B23D
B25C
F16H
G01M
B27B
H02P

Der vorliegende Recherchenbericht wurde für alle Patentansprüche erstellt

| Recherchenort | Abschlußdatum der Recherche | Prüfer |
|---|---|---|
| München | 12. März 2026 | Humbert, Thomas |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 21 5528

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2026

| Im Recherchenbericht angeführtes Patentdokument | Datum der Veröffentlichung | Mitglied(er) der Patentfamilie | Datum der Veröffentlichung |
|---|---|---|---|
| WO 2023195888 A1 | 12-10-2023 | DE 112023001833 T5 | 27-03-2025 |
| | | SE 2250443 A1 | 08-10-2023 |
| | | US 2025251305 A1 | 07-08-2025 |
| | | WO 2023195888 A1 | 12-10-2023 |
| JP 2014116994 A | 26-06-2014 | JP 5952725 B2 | 13-07-2016 |
| | | JP 2014116994 A | 26-06-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2023195888 A1